# EUROPÄISCHE PATENTANMELDUNG

(11) **EP 2 174 784 A1**
(43) Veröffentlichungstag der Anmeldung: **14.04.2010**
(21) Anmeldenummer: 08405259.6
(22) Anmeldetag: 13.10.2008
(51) Int. Cl.: B32B 38/10

(54) **Verfahren zum Abtrennen eines überstehenden Abschnitts einer Schicht eines Laminats**

(71) Anmelder: 3S Swiss Solar Systems AG, 3250 Lyss (CH); Güdel Group AG, 4900 Langenthal (CH)
(72) Erfinder: Blanchet, Marcel, 8172 Niederglatt (CH); Kappaun, Roland, 88690 Uhldingen-Mühlhofen (DE); Zulauf, Walter, 4932 Gutenburg (CH); Kurt, Hans-Ulrich, 4566 Kriegstetten (CH); Güdel, Rudolf, 4500 Solothurn (CH); Heid, Rudolf, 4542 Luterbach (CH)
(74) Vertreter: Rüfenacht, Philipp Michael

(57) **Zusammenfassung**

Bei einem Verfahren zum Abtrennen eines überstehenden Abschnitts einer Schicht eines Laminats (200), insbesondere einer Rückseitenfolie (230) eines Laminats (200), welches mindestens eine feste Platte (210), insbesondere eine Glasplatte, aufweist, wird ein Trennwerkzeug (100) mit einem rotierenden Schneidmesser (130) und einem rotierenden Gegenmesser (140) eingesetzt. Die Messer (130, 140) werden gegenläufig um parallele Achsen in Drehung versetzt. Das Schneidmesser (130) und das Gegenmesser (140) sind zudem derart seitlich versetzt, dass in einem Arbeitsbereich eine Hauptfläche des Schneidmessers (130) eine Hauptfläche des Gegenmessers (140) kontaktiert. Die versetzte Anordnung der Messer (130, 140) und die Tatsache, dass sich die Hauptfläche des Schneidmessers (130) und die Hauptfläche des Gegenmessers (140) gegenseitig kontaktieren, ermöglicht einen präzisen, scherenartigen Schnittvorgang, der besonders gut für die Abtrennung von überstehenden Abschnitten eines Laminats (200) eignet. Weil die beiden Hauptflächen unmittelbar aneinander anschliessen, wird ein Einklemmen von abgetrenntem Material zwischen den Messern (130, 140) verhindert.

## Beschreibung

### Technisches Gebiet

Die Erfindung betrifft ein Verfahren zum Abtrennen eines überstehenden Abschnitts einer Schicht eines Laminats. Dieses ist besonders geeignet zum Abtrennen einer Rückseitenfolie eines Laminats, welches mindestens eine feste Platte, insbesondere eine Glasplatte, aufweist. Die Erfindung betrifft weiter ein Trennwerkzeug zum Abtrennen eines überstehenden Abschnitts einer Schicht eines Laminats, eine Bearbeitungsstation mit einem solchen Trennwerkzeug, sowie eine Anlage mit einer solchen Bearbeitungsstation.

### Stand der Technik

Laminate haben einen weiten Anwendungsbereich und können sehr unterschiedliche Schichtsysteme aufweisen. Eine Gruppe von Laminaten weist eine oder mehrere feste Platten auf, welche dem Laminat Formstabilität verleihen. Als feste Platten dienen oft Glasplatten, insbesondere dann, wenn das Laminat ganz oder teilweise transparent sein soll. Beispiele für solche Laminate sind Verbundgläser, welche bei der Automobil- oder Gebäudeverglasung zum Einsatz kommen.

Eine spezifische Anwendung solcher Laminate sind zudem Solarpanels (auch Solarmodule genannt). Es ist bekannt, solche Solarpanels aufzubauen, indem eine Mehrzahl von mechanisch empfindlichen Solarzellen (photovoltaische Zellen, z. B. Dickschicht-Solarzellen auf der Basis von Silicium) elektrisch miteinander verbunden und in einem Schichtsystem eingeschlossen werden. Das Schichtsystem verleiht mechanische Stabilität und schützt die eingeschlossenen Zellen vor Witterungseinflüssen oder mechanischen Beeinträchtigungen. Das Schichtsystem kann beispielsweise auf einem für die relevanten Anteile der Sonnenstrahlung transparenten Glassubstrat und einer Rückseitenfolie basieren, zwischen welchen die Solarzellen und die sie verbindenden elektrischen Verbinder eingeschlossen sind. Zwischen den genannten Schichten sind Folien aus EVA (Ethylenvinylacetat) oder einem anderen geeigneten Material eingebracht, so dass das Schichtsystem unter dem Einfluss von Wärme und Druck zusammenlaminiert werden kann. Die Solarzellen können von einem Rahmen umschlossen werden.

Bei der Herstellung derartiger Laminate ist es oft notwendig, über die feste Platte überstehende Abschnitte von Laminierschichten bzw. der Rückseitenfolie nach dem Laminieren abzutrennen. Dafür sind mehrere Verfahren bekannt:

So beschreibt die US 4,067,764 (J. S. Walker, W. C. Kittler) ein Solarpanel, bestehend aus einer Glasplatte, zwei PVB-Schichten, zwischen denen Solarzellen angeordnet sind, und einer PET-Schicht, die das Schichtsystem abschliesst. Die PET-Schicht steht über die weiteren Schichten hinaus, so dass sie an einer festen Grundplatte aus Metall befestigt werden kann. Nach dem Laminieren wird der überstehende Teil der PET-Schicht abgeschnitten. Über den Prozessschritt des Abschneidens ist nichts im Detail offenbart. Es ist davon auszugehen, dass das Abschneiden in herkömmlicher Weise manuell erfolgt, z. B. manuell, mit Hilfe eines Messers mit scharfer Klinge.

Das manuelle Abschneiden der Randbereiche ist allerdings zeitaufwendig und die Verletzungsgefahr für das Personal ist erheblich. Es gibt deshalb Ansätze, zum Abschneiden spezielle Werkzeuge einzusetzen, bzw. diesen Vorgang zu automatisieren:
Die DE 34 28 547 C2 (Central Glass / Toray Engineering) betrifft ein Schneidgerät zum Abschneiden eines über den Flächenbereich von Plattenglasschichten hinausgehenden Aussensaums einer zwischen den Plattenglasschichten angeordneten Zwischenschicht aus PVB. Dazu wird eine längs des Umfangs der Glasschichten bewegbare Bandmessereinheit eingesetzt. Um ein Verwickeln des abgeschnittenen Aussensaums in die Umlaufscheiben der Bandmessereinheit zu verhindern, umfasst das Schneidgerät ein Gleitstück mit Abstreiferkante und Einrichtungen zum Abweisen des abgeschnittenen Aussensaums. Das Schneidgerät wird während des Abschneidens an der Aussenkante der Glasplattenschichten des Laminats entlang geführt.
Die EP 0 845 440 B1 (Central Glass) betrifft eine weitere Vorrichtung zum Abschneiden des Randbereichs einer Zwischenschicht einer laminierten Glasplatte. Die Vorrichtung umfasst einen Roboterarm mit einer Roboterhand, welche ein lösbares Schneidmesser hält; das Schneidmesser wird vom Randbereich der Glasplatte weg bewegt, wenn eine bestimmte Widerstandskraft überschritten wird.
Die EP 1 382 441 A1 betrifft ein Verfahren zum automatischen Herstellen von Verbundglas. Neben anderen Stationen umfasst eine dazu eingesetzte Anlage eine Station zum Beschneiden einer PVB-Zwischenschicht. Das zusammengesetzte Schichtsystem wird unter Beibehaltung seiner Ausrichtung in diese Station transportiert, das Beschneiden wird durch zwei automatisierte Schneidköpfe erledigt. Die Schneidköpfe sind Teile von 6-achsigen Robotern. Mit einem weiteren Schneidkopf kann der Überstand der PVB-Schicht auf praktisch Null reduziert werden. Während des Abschneideprozesses werden die zwei Glasplatten mit Hilfe von Positionierrollen zueinander und relativ zur Zwischenschicht positioniert.
Die EP 0 861 813 B1 (Bottero) betrifft eine Schneidvorrichtung zum Abschneiden eines Umfangsabschnitts einer flexiblen Schicht, der über eine Platte hinausragt, welche mit der Schicht beschichtet wird, z. B. zum Beschneiden von Zwischenschichten bei der Verbundglasherstellung. Die Vorrichtung umfasst eine motorgetriebene rotierende Schneidscheibe sowie Anschlagmittel für den Umfangsabschnitt, die tangential an einer Umfangsfläche der Schneidscheibe angeordnet sind und an der Schneidstelle eine Gegenkraft zur Kraft der Schneidscheibe ausüben. Die Anschlagmittel umfassen eine drehbare Anschlagscheibe, deren Achse schräg zur Achse der Schneidscheibe orientiert ist.

Es hat sich gezeigt, dass die vorhandenen Lösungen in bestimmten Situationen nur unbefriedigende Schnittergebnisse liefern. Insbesondere sind diese Lösungen wenig geeignet, um die relativ zähe Rückseitenfolie eines Schichtsystems für ein Solarpanel präzise abzutrennen. Bei der Herstellung von festen Platten, insbesondere von Glasplatten, sind zudem Grössentoleranzen im Bereich von 0.5 - 2 mm zu erwarten. Falls eine präzise Abtrennung der überstehenden Randbereiche mit einem vorgegebenen Abstand zum Rand der festen Platte erforderlich ist, muss das Abschneiden auf die Kante der jeweiligen Platte ausgerichtet werden. Eine mechanische Abstützung am Laminat, wie sie bei einigen der beschriebenen Ansätze vorgeschlagen wird, ist jedoch oft nicht möglich, weil die Kante der festen Platte nach der Lamination aufgrund der seitlich ausquellenden Laminierschichten, den verschiedenen Ausdehnungen der Schichten und/oder der Rückseitenfolie mechanisch nur noch schwer detektiert werden kann. Bei einer mechanischen Abstützung ist zudem die erreichbare Arbeitsgeschwindigkeit stark reduziert, weil die Trägheit des jeweiligen mechanischen Systems bei zu hohen Geschwindigkeiten dazu führen würde, dass das Werkzeug nicht rechtzeitig wegbewegt werden kann und das Werkzeug und gegebenenfalls auch das Laminat Schaden nehmen könnten.

### Darstellung der Erfindung

Aufgabe der Erfindung ist es deshalb, ein dem eingangs genannten technischen Gebiet zugehörendes Verfahren zum Abtrennen eines überstehenden Abschnitts einer Schicht eines Laminats zu schaffen, welches einen präzisen Schnitt und eine hohe Arbeitsgeschwindigkeit ermöglicht.

Die Lösung der Aufgabe ist durch die Merkmale des Anspruchs 1 definiert. Gemäss der Erfindung wird im Rahmen des erfindungsgemässen Verfahrens ein Trennwerkzeug mit einem rotierenden Schneidmesser und einem rotierenden Gegenmesser eingesetzt, wobei die Messer gegenläufig um parallele Achsen in Drehung versetzt werden und wobei das Schneidmesser und das Gegenmesser derart seitlich versetzt sind, dass in einem Arbeitsbereich eine Hauptfläche des Schneidmessers eine Hauptfläche des Gegenmessers kontaktiert.

Ein Trennwerkzeug zur Verwendung im erfindungsgemässen Verfahren umfasst also bevorzugt folgende Elemente:
a) ein rotierendes Schneidmesser,
b) ein rotierendes Gegenmesser,
c) mindestens eine Antriebseinrichtung zum drehbaren Antreiben des Schneidmessers und des Gegenmessers,
   wobei
d) das Schneidmesser und das Gegenmesser um parallele Drehachsen gelagert sind,
e) das Schneidmesser und das Gegenmesser gegenläufig antreibbar sind, und wobei
f) das Schneidmesser und das Gegenmesser derart seitlich versetzt angeordnet sind, dass in einem Arbeitsbereich eine Hauptfläche des Schneidmessers eine Hauptfläche des Gegenmessers kontaktiert.

Bei den rotierenden Schneidmessern handelt es sich insbesondere um kreisförmige Scheiben mit umlaufender Schneidkante. Seitlich versetzt bedeutet in diesem Zusammenhang, dass eines der Messer in einer Richtung senkrecht zu den Hauptflächen der Messer (also axial) derart zurückversetzt ist, dass dessen vordere Hauptfläche die hintere Hauptfläche des anderen Messers gerade noch kontaktiert.

Die beiden Messer können durch eine einzige Antriebsvorrichtung angetrieben werden, wobei ein Abtrieb eines Antriebs auf beide Messer verteilt wird, oder es sind für die zwei Messer zwei gesonderte Antriebsvorrichtungen vorhanden, wobei diese jedoch bevorzugt miteinander synchronisiert sind. Die versetzte Anordnung der Messer und die Tatsache, dass sich die Hauptfläche des Schneidmessers und die Hauptfläche des Gegenmessers gegenseitig kontaktieren, ermöglicht einen präzisen, scherenartigen Schnittvorgang, der sich besonders gut für die Abtrennung von überstehenden Abschnitten eines Laminats eignet. Weil die beiden Hauptflächen unmittelbar aneinander anschliessen, wird ein Einklemmen von abgetrenntem Material zwischen den Messern verhindert.

Das erfindungsgemässe Verfahren und das erfindungsgemässe Trennwerkzeug sind besonders geeignet zur Abtrennung einer Rückseitenfolie eines Laminats für ein Solarpanel, z. B. aus Tedlar®, wobei im gleichen Arbeitsgang auch überstehende Abschnitte eines Laminiermaterials, z. B. EVA, abgetrennt werden können.

Das erfindungsgemässe Verfahren und das Trennwerkzeug eignen sich auch für andere Laminate, insbesondere für Verbundgläser (welche üblicherweise keine Rückseitenfolie aufweisen) oder für Laminate ohne feste Platten. Letztere lassen sich mit dem erfindungsgemässen Verfahren bzw. Trennwerkzeug gut verarbeiten, weil diese keine Abstützung am Laminat erfordern.

Mit Vorteil sind die Drehachsen des Schneidmessers und des Gegenmesser derart angeordnet, dass eine durch die beiden Drehachsen verlaufende Ebene schräg zu einer Arbeitsrichtung verläuft, wobei ein Winkel zwischen dieser Ebene und der Arbeitsrichtung bevorzugt 55 - 85°, besonders bevorzugt 65 - 80°, beträgt.

Mit dieser Anordnung eignet sich das Verfahren bzw. das Trennwerkzeug besonders gut für die Abtrennung einer vergleichsweise zähen Rückseitenfolie. Zu diesem Zweck wird das zu bearbeitende Laminat mit Vorteil mit der Rückseitenfolie nach oben angefördert, und das Gegenmesser ist derart oben angeordnet, dass es vor dem Schneidmesser mit einem zu bearbeitenden Abschnitt des Werkstücks in Kontakt kommt. Das Gegenmesser wirkt so wie ein Niederhalter für die Rückseitenfolie, bevor der eigentliche Schneidvorgang zwischen dem Schneidmesser und dem Gegenmesser erfolgt.

Mit Vorteil werden das Schneidmesser und das Gegenmesser derart aufeinander zugestellt, dass sie in axialer Richtung gegeneinander vorgespannt sind. Die Vorspannung stellt eine zuverlässige Kontaktierung der Hauptflächen des Schneid- und des Gegenmessers sicher.

Bei einer äusserst formstabilen Ausführung der Messer und einer präzisen Zustellung derselben, kann auf eine Vorspannung grundsätzlich auch verzichtet werden.

Bevorzugt werden die Drehbewegungen des Schneidmessers und des Gegenmessers sowie eine Relativbewegung zwischen dem Trennwerkzeug und dem Laminat derart gesteuert, dass ein Umfangsbereich der Messer während des Abtrennens relativ zum überstehenden Abschnitt im Wesentlichen stillsteht. Das heisst, die Umfangsgeschwindigkeit an der Schneidstelle entspricht gerade der Relativgeschwindigkeit des Laminats zu den Messern. Dies bedeutet, dass das Schneid- und das Gegenmesser auf dem Material gleichsam abrollen. Gleichzeitig findet zwischen den einander kontaktierenden Hauptflächen der Messer ebenfalls nur eine geringfügige Relativbewegung statt, so dass die entsprechenden Reibungskräfte minimiert werden.

Mit Vorteil umfasst das erfindungsgemässe Verfahren folgende Schritte, wenn es zum Bearbeiten eines Laminats mit einer festen Platte eingesetzt wird:
a) Vor dem Laminationsschritt wird mindestens eine Ortsmarkierung an der festen Platte angebracht, und es wird mindestens ein Abstands- und/oder Winkelwert der festen Platte in Bezug auf die Ortsmarkierung bestimmt.
b) Nach dem Laminationsschritt wird der überstehende Abschnitt abgetrennt, wobei das Laminat und das Trennwerkzeug in Abhängigkeit der Ortsmarkierung und des mindestens einen Abstands- und/oder Winkelwerts automatisch relativ zueinander positioniert werden.

Eine Anlage zum Bearbeiten des Laminats umfasst entsprechend:
a) eine Markierstation zum Anbringen einer Ortsmarkierung an der festen Platte;
b) eine Messstation zum Bestimmen mindestens eines Abstands- und/oder Winkelwerts der festen Platte in Bezug auf die Ortsmarkierung;
c) eine Laminierstation zum Laminieren des Laminats, welche der Markierstation und der Messstation nachgeordnet ist; und
d) eine Bearbeitungsstation mit einem erfindungsgemässen Trennwerkzeug, wobei das Trennwerkzeug und das Laminat, in Abhängigkeit der Ortsmarkierung und des mindestens einen Abstands- und/oder Winkelwertes, automatisch relativ zueinander positionierbar sind.

Zum Erfassen der Ortsmarkierung umfasst die Bearbeitungsstation bevorzugt eine Kamera.

Nähere Angaben zu diesen Verfahrensschritten und der entsprechenden Anlage gehen aus der am 16. Mai 2008 eingereichten EP 08 405 137.4 der Anmelder der vorliegenden Anmeldung hervor. Insbesondere bilden das hier offenbarte Verfahren und die offenbarten Vorrichtungen eine bevorzugte Realisierungsmöglichkeit für die im Rahmen des Verfahrens der EP 08 405 137.4 erfolgende Bearbeitung des Laminats.

Alternativ können die Kanten auf eine andere Art und Weise bestimmt und das Werkzeug auf eine andere Art und Weise gesteuert werden. Bei Laminaten ohne feste Platte, bei welchen sämtliche Schichten durchschnitten werden können, kann der gewünschte Schnittverlauf beispielsweise für alle Werkstücke identisch fest vorgegeben werden.

Bevorzugt sind die Drehachse des Schneidmessers und/oder die Drehachse des Gegenmessers derart verstellbar, insbesondere automatisch verstellbar, ausgebildet, dass ein Abstand der Drehachse des Schneidmessers und der Drehachse des Gegenmessers verstellbar ist. Dies ermöglicht zum einen eine genaue Justage von neuen Messern bzw. eine Aufnahme von Messern verschiedenen Durchmessers. Zum anderen wird ein Nachstellen der beiden Messer ermöglicht, was z. B. aufgrund von Verschleiss oder nach einem Nachschärfen der Messer erforderlich ist.

Das erfindungsgemässe Trennwerkzeug kommt insbesondere in einer Bearbeitungsstation zum Abtrennen eines überstehenden Abschnitts einer Schicht eines Laminats zum Einsatz. Diese kann Teil einer Bearbeitungsstrasse zur Herstellung eines Laminats bilden, welche beispielsweise auch eine Station zum Laminieren sowie weitere Bearbeitungsstationen umfasst.

Mit Vorteil umfasst die Bearbeitungsstation zum Abtrennen eines überstehenden Abschnitts einer Schicht eines Laminats
a) eine Halteeinrichtung, insbesondere einen Tisch, zum Halten des Laminats,
b) eine Lineareinheit, welche entlang dem in der Halteeinrichtung gehaltenen Laminats bewegbar ist, und
c) einen Trennkopf, an welchem das Schneidmesser und das Gegenmesser angeordnet sind, wobei der Trennkopf an der Lineareinheit gelagert ist.

Die Halteeinrichtung ermöglicht eine stabile Fixierung des Laminats für den Bearbeitungsvorgang. Die Lineareinheit ermöglicht schnelle Linearbewegungen des Trennkopfs relativ zum Laminat und damit einen schnellen Bearbeitungsvorgang.

Der Trennkopf ist mit Vorteil an der Lineareinheit derart beweglich gelagert, dass er in einer zur Bewegungsrichtung der Lineareinheit senkrechten Richtung horizontal bewegbar ist. Der Trennkopf ist beispielsweise an einer Linearachse angeordnet, welche sich brückenartig über das Werkstück erstreckt und von der Lineareinheit ihrerseits über das Werkstück bewegt werden kann. Neben der ersten linearen Bewegungsachse, die durch die Lineareinheit bereitgestellt wird, ist somit auch eine zweite lineare Bewegungsachse für den Trennkopf vorhanden. Dies ermöglicht eine flexible Positionierung der am Trennkopf angeordneten Messer relativ zur Aussenkante des zu bearbeitenden Laminats.

Mit Vorteil ist zudem der Trennkopf derart ausgebildet, dass das Schneidmesser und das Gegenmesser bezüglich der Lineareinheit um eine zu einer Hauptfläche des zu bearbeitenden Laminats senkrechte Achse drehbar gelagert sind. Zusammen mit der Lineareinheit und der in Querrichtung beweglichen Lagerung des Trennkopfs ermöglicht dies eine Bearbeitung von in der Halteeinrichtung gehaltenen rechteckigen Laminaten entlang aller vier Kanten, ohne dass das Laminat umpositioniert werden muss. Dazu wird in den Ecken des Laminats der Trennkopf um jeweils 90° um die vertikale Achse gedreht und die Linearbewegung abwechslungsweise von der Lineareinheit und der quer dazu angeordneten Linearachse bewirkt.

Alternativ weist der Trennkopf weniger Freiheitsgrade auf. Die fehlenden Freiheitsgrade können im Rahmen einer beweglichen Werkstückhalterung realisiert sein, oder es werden während der Bearbeitung Umpositionierungen des Werkstücks (z. B. mit Hilfe eines Handling-Roboters) ausgeführt.

In einer bevorzugten Ausführungsform weist der Trennkopf mindestens zwei Servo-Antriebe auf. Diese bewirken über koaxiale Wellen einen Antrieb des Schneidmessers und des Gegenmessers und eine Verstellung der Drehlage des Schneidmessers und des Gegenmessers um die vertikale Achse. Durch die Verwendung zweier koaxialer Wellen (wobei mindestens eine der Wellen als Hohlwellen ausgeführt ist) wird es ermöglicht, beide Servo-Antriebe, namentlich auch denjenigen für den Antrieb der Messer im drehfesten Teil des Trennkopfs unterzubringen. Anstelle von einem Servo-Antrieb können zum Antreiben der beiden Messer auch zwei gesonderte (mit Vorteil aber synchronisierte) Antriebe vorgesehen sein, die über jeweilige koaxiale Wellen die Messer antreiben.

Mit Vorteil umfasst der Trennkopf noch einen dritten (bzw. vierten) Servo-Antrieb, welcher über eine weitere koaxiale Welle eine Relativverstellung der Drehachse des Schneidmessers und der Drehachse des Gegenmessers ermöglicht. Auch dieser Antrieb kann auf diese Weise am drehfesten Teil des Trennkopfs angeordnet werden.

Alternativ erfolgt die Relativverstellung der Drehachsen, welche in der Regel nur periodisch notwendig ist, manuell.

Bei einer bevorzugten Ausführungsform umfasst die Bearbeitungsstation eine Schärfstation, welche derart angeordnet ist, dass sie zum Schärfen des Schneidmessers und des Gegenmessers vom Trennkopf automatisch angefahren werden kann. Die Schärfung kann somit vollautomatisch erfolgen, beispielsweise immer dann, wenn festgestellt wird, dass sich das Schneidergebnis verschlechtert oder wenn durch eine (automatische) optische Überprüfung der Schneidkanten Abnutzungen einer gewissen Grössenordnung detektiert werden. Wahlweise kann der Schärfvorgang auch manuell ausgelöst werden, wobei die weiteren Schritte aber vollautomatisch erfolgen.

Alternativ erfolgt die Schärfung in bekannter Weise, z. B. indem die Messer manuell vom Trennkopf gelöst und durch neue bzw. nachgeschliffene Messer ersetzt werden.

Bei einer bevorzugten Ausführungsform umfasst die Bearbeitungsstation eine Wanne zum Sammeln von Spänen und eine Transporteinrichtung zum Abtransport der gesammelten Späne. Dies ermöglicht eine vollautomatische Entfernung des beim Trennvorgang entstehenden Abfalls.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A, B: Querschnittsdarstellungen eines erfindungsgemässen Trennkopfs;
- Fig. 1C: eine Frontansicht des Trennkopfs;
- Fig. 1D: ein Schrägbild des Trennkopfs;
- Fig.2: eine schematische Querschnittsdarstellung des erfindungsgemässen Trennvorgangs;
- Fig. 3: ein Schrägbild einer erfindungsgemässen Bearbeitungsstation;
- Fig. 4A-C: zwei seitliche Ansichten und eine Draufsicht auf die Bearbeitungsstation; und
- Fig. 5: ein vergrösserter Ausschnitt aus dem Schrägbild der Bearbeitungsstation.

Grundsätzlich sind in den Figuren gleiche Teile mit gleichen Bezugszeichen versehen.

### Wege zur Ausführung der Erfindung

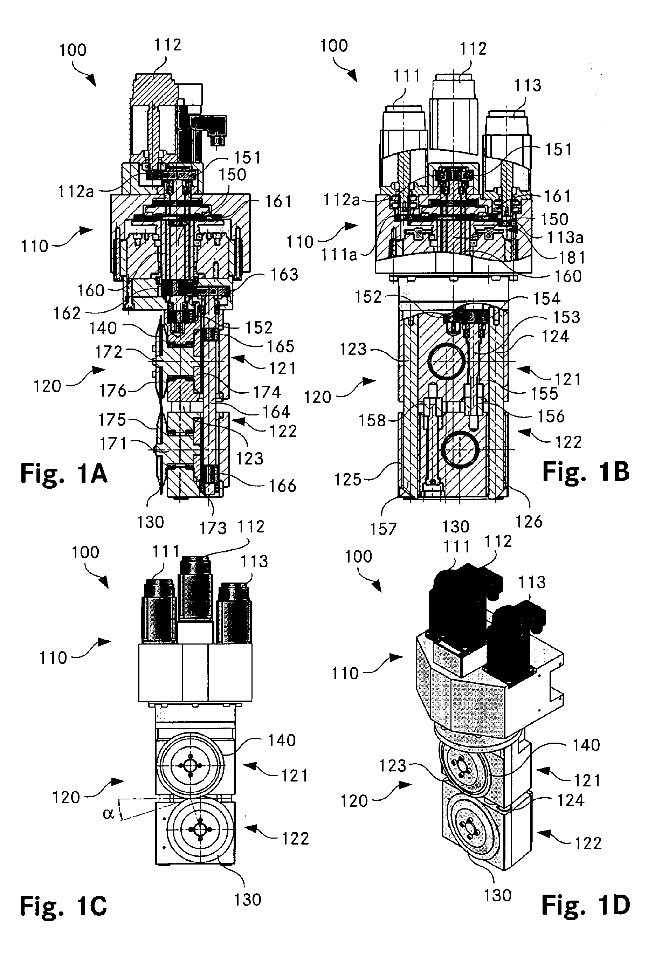

Die Figuren 1A, 1B sind Querschnittsdarstellungen eines erfindungsgemässen Trennkopfs 100, die Figur 1D zeigt eine Frontansicht, die Figur 1C ein Schrägbild des Trennkopfs 100.

Der Trennkopf umfasst einen oberen Abschnitt 110, auf welchem drei Servoantriebe 111, 112, 113 angeordnet sind, sowie einen bezüglich des oberen Abschnitts 110 um eine vertikale Achse drehbaren unteren Abschnitt 120. Der untere Abschnitt 120 umfasst wiederum einen oberen Teil 121 und einen dazu vertikal verschiebbaren unteren Teil 122, welche eigene Gehäuse aufweisen. Um die Relativverschiebung zu ermöglichen, sind zwei zylindrische Führungsstangen 123, 124 an einem ihrer Enden im oberen Teil 121 des unteren Abschnitts 120 verschraubt. Sie erstrecken sich vertikal nach unten, und deren vordere Abschnitte sind in entsprechenden zylindrischen Aufnahmen 125, 126 des unteren Teils 122 aufgenommen. Die Aufnahmen 125, 126 bilden ein Gleitlager für die Führungsstangen 123, 124.

Im unteren Teil 122 des unteren Abschnitts 120 ist ein Schneidmesser 130 drehbar gelagert, im oberen Teil 121 ein Gegenmesser 140. Das Schneidmesser 130 und das Gegenmesser 140 sind scheibenförmig aus HSS-Stahl ausgebildet und haben Kreisform mit einem Durchmesser von 160 mm. Am Umfang sind Schneidkanten ausgebildet. Die Drehachsen der beiden Messer sind zueinander parallel, jedoch in Bezug auf die Vertikale seitlich versetzt. An dem in Arbeitsrichtung vorne liegenden Treffpunkt der beiden Messer, welcher vertikal unterhalb der Drehachse des Gegenmessers 140 liegt, beträgt ein Winkel α zwischen den Tangenten der Schneidkanten 17.5°. Durch verstellen der beiden Teile 121, 122 zueinander kann der Abstand der beiden Messer und dadurch auch dieser Schneidwinkel verändert werden. Die gegenseitige Verstellmöglichkeit erlaubt auch ein Nachstellen des Abstands zwischen den beiden Messern nach einem Schärfvorgang bzw. einem Messeraustausch.

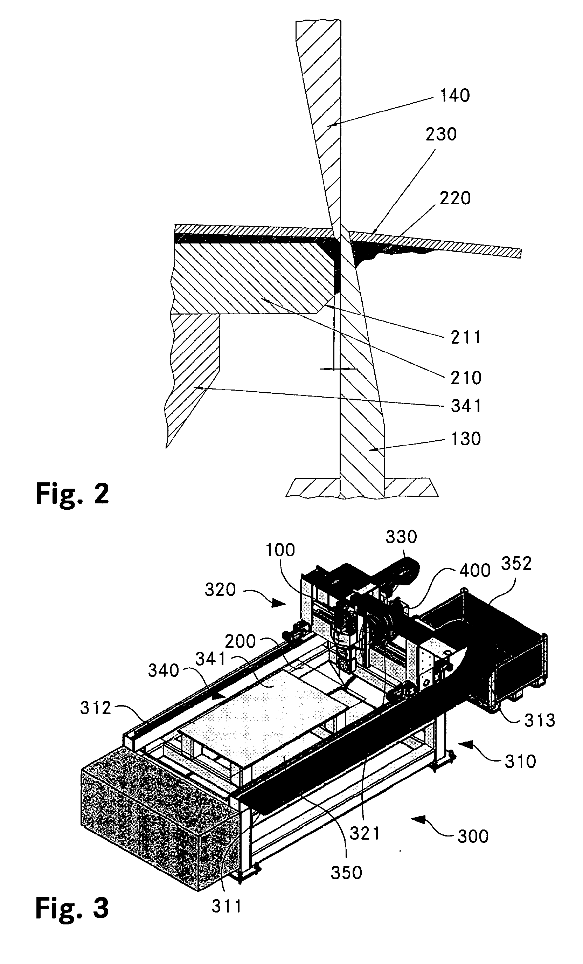

Wie in den Figuren 1A sowie 2 gut sichtbar ist, kontaktiert im Bereich des Treffpunkts eine umfangsseitige Region der rückseitigen Hauptfläche des Gegenmessers 140 eine entsprechende umfangsseitige Region der frontseitigen Hauptfläche des Schneidmessers 130, d. h. das Gegenmesser 140 ist in axialer Richtung vor dem Schneidmesser 130 angeordnet. Die beiden Messer sind gegenseitig leicht verspannt, so dass der Kontakt zwischen den erwähnten Hauptflächen stets aufrecht erhalten bleibt.

Der mittig angeordnete Servoantrieb 112 ist gegenüber den beiden seitlichen Servoantrieben 111, 113 leicht nach vorne versetzt. Dessen Antriebsritzel 112a wirkt über ein weiteres Ritzel 151 auf eine Welle 150. An deren unteren Ende weist diese ein weiteres Ritzel 152 auf, welches mit einem auf einer weiteren Welle 153 angeordneten weiteren Ritzel 154 kämmt. An deren unteren Ende ist die weitere Welle 153 mit einem Aussengewinde 155 versehen, welches mit einem Innengewinde einer fest mit dem unteren Teil 122 verbundenen Mutter 156 zusammenwirkt. Mittels des Servoantriebs 112 kann somit der untere Teil 122 in Bezug auf den oberen Teil in vertikaler Richtung verstellt werden. Eine dritte Welle 157 ist im unteren Teil 122 drehbar aufgenommen. Sie weist an ihrem oberen Ende ein Aussengewinde auf, welches mit einem Innengewinde einer am oberen Teil 121 fest angeordneten Mutter 158 zusammenwirkt.

In der dargestellten Ausführungsform ist die dritte Welle 157 frei drehbar und stellt lediglich einen Anschlag zur Verfügung. Alternativ kann aber auf den mittleren Servoantrieb 112 verzichtet werden, und der Abstand der beiden Teile 121, 122 des unteren Abschnitts 120 erfolgt durch Drehen der dritten Welle 157, welche zu diesem Zweck an ihrem von aussen zugänglichen unteren Ende ein Schlüsselprofil (z. B. ein Sechskant-Inbus-Profil) aufweist.

Das Antriebsritzel 111a des in der Figur 1B links angeordneten Servoantriebs 111 wirkt mit einem Ritzel 161 zusammen, das drehfest mit einer Hohlwelle 160 verbunden ist. Die vorher erwähnte Welle 150 ist in der Hohlwelle 160 teilweise aufgenommen. Am unteren Ende der Hohlwelle 160 ist ein weiteres Ritzel 162 drehfest mit der Hohlwelle 160 verbunden. Dieses wirkt auf ein Ritzel 163 einer weiteren vertikal verlaufenden Welle 164. Diese Welle 164 trägt zwei weitere Ritzel 165, 166, welche mit Kronenrädern 173, 174 der beiden Messerträger 171, 172 derart zusammenwirken, dass diese gegenläufig angetrieben werden. Die in Wälzlagern gelagerten Messerträger 171, 172 sind mit den Kronenrädern 173, 174 drehfest verbunden. Sie umfassen an ihrer vorderen Seite, die über das Gehäuse vorsteht, jeweils einen sich radial erweiternden Abschnitt, welcher eine Aufspannfläche für das jeweilige Messer bildet. In diesem Abschnitt sind vier Gewindelöcher vorhanden sowie ein zentraler Zentrierdorn. Das Schneidmesser ist mit vier der Anordnung der Gewindelöcher entsprechenden Öffnungen versehen sowie mit einer zentralen Öffnung, die mit dem Zentrierdorn zusammenwirken kann. Somit kann das jeweilige Messer mit Hilfe einer Befestigungsplatte 175, 176, die ebenfalls vier Öffnungen aufweist, am Messerträger 171, 172 sicher befestigt werden. Das Zusammenwirken der auf der weiteren Welle 164 angeordneten Ritzel 165, 166 mit den Kronenrädern 173, 174 ermöglicht ein Antreiben der beiden Messerträger 171, 172 trotz ihrer bezüglich der Drehachse der Welle 164 seitlich versetzten Anordnung und ungeachtet des aktuellen vertikalen Abstands der beiden Drehachsen.

Das Antriebsritzel 113a des in der Figur 1B rechts angeordneten Servoantriebs 113 wirkt auf ein Untersetzungsgetriebe 181 mit Hohlwelle des Typs RV-C der Firma Teijin Seiki Boston Inc. Dessen Abtriebszahnräder sind im unteren Abschnitt 120 des Trennkopfs 100 drehbar gelagert. Der untere Abschnitt 120 wiederum ist drehbar im oberen Abschnitt 110 gelagert. Mit Hilfe des Servoantriebs 113 kann somit der untere Abschnitt 120 relativ zum oberen Abschnitt 110 um eine vertikale Achse gedreht werden.

Die Figur 2 ist eine schematische Querschnittsdarstellung des erfindungsgemässen Trennvorgangs. Das zu bearbeitende Laminat 200 umfasst eine Glasplatte 210 aus Einscheiben-Sicherheitsglas (ESG), welche an ihrem Aussenrand auf übliche Weise beidseitig mit Facetten 211 versehen ist. Mit der Glasplatte 210 über eine Laminat-Zwischenschicht 220 aus EVA verbunden ist eine Rückseitenfolie 230 aus Polyvinylfluorid (PVF), im Handel erhältlich als Tedlar® PV2010 der Firma DuPont. Die Rückseitenfolie 230 weist eine Dicke auf von 0.35 mm, die Laminat-Zwischenschicht 220 hat eine Dicke von ca. 0.2 - 0.3 mm. Es ist gut erkennbar, dass in unbearbeitetem Zustand die Rückseitenfolie 230 erheblich über die Glasplatte 210 hinausragt und dass die Laminat-Zwischenschicht 220 einen unregelmässigen Rand aufweist.

Ebenfalls aus der Figur 2 ersichtlich sind die Querschnitte des Schneidmessers 130 und des Gegenmessers 140. Die einander kontaktierenden Hauptflächen sind eben und vertikal ausgerichtet, während die jeweils gegenüberliegenden Hauptflächen im äusseren Bereich konisch zulaufend sind, so dass Schnittkanten gebildet werden.

Zur Bearbeitung ist das Laminat 200 mit der Glasplatte 210 nach unten auf eine Trägerplatte 341 aufgelegt, dessen Randbereiche stehen jedoch über die Trägerplatte 341 hervor (siehe unten). Der Trennkopf mit dem Schneidmesser 130 und dem Gegenmesser 140 wird nun so an das zu bearbeitende Laminat 200 herangefahren, dass die Rückseitenfolie 230 zusammen mit der Laminat-Zwischenschicht 220 in einem vorbestimmten Abstand zur Aussenkante der Glasplatte 210 abgeschnitten werden kann. Die Rückseitenfolie 230 wird aufgrund der seitlich versetzten Anordnung der beiden Messer (siehe Figur 1C) zunächst vom Gegenmesser 140 auf der der Glasplatte 210 abgewandten (also freien) Seite kontaktiert, wobei das Gegenmesser 140 mit geradem Schnitteinlauf zunächst primär als Niederhalter wirkt. Anschliessend erfolgt zwischen dem Schneidmesser 130 und dem Gegenmesser 140 der eigentliche Abtrennvorgang, welcher scherenartig abläuft. Die Facette 211 an der Kontaktfläche zwischen Glasplatte 210 und Rückseitenfolie 230 ermöglicht eine Positionierung der Messer derart, dass das Gegenmesser 140, welches sich aufgrund der radial versetzten Anordnung der beiden Messer näher bei der Glasplatte 210 befindet, so positioniert werden kann, dass seine Schneidkante bis in den Bereich der Laminat-Zwischenschicht 220 reicht. Die Schneidkante des Schneidmessers 130 ihrerseits reicht nach oben bis über die Rückseitenfolie 230 hinaus.

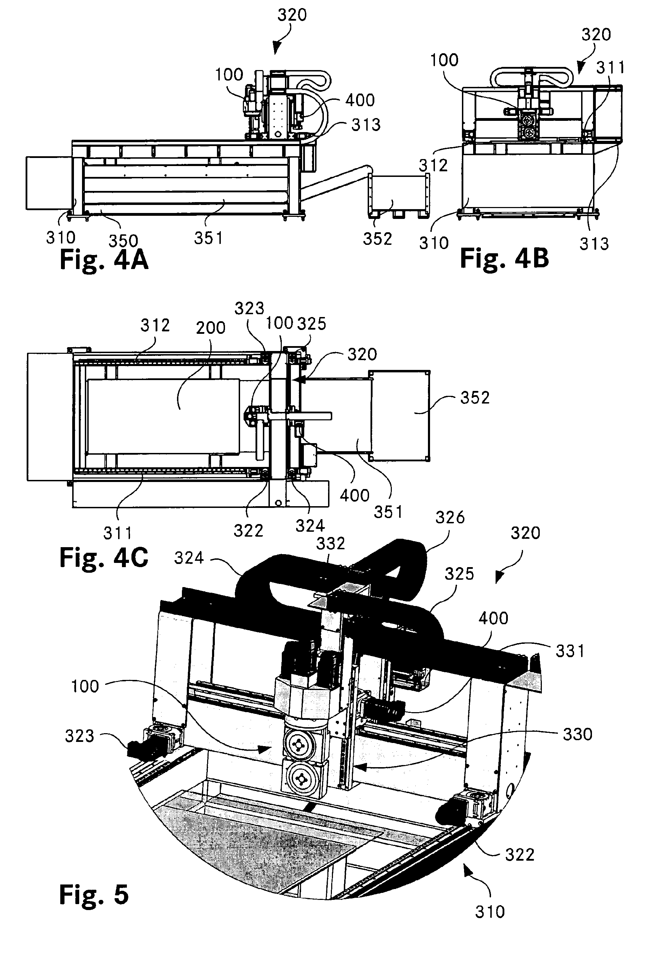

Die Figur 3 zeigt ein Schrägbild einer erfindungsgemässen Bearbeitungsstation. In den Figuren 4A-C sind zwei seitliche Ansichten und eine Draufsicht auf die Bearbeitungsstation dargestellt. Die Bearbeitungsstation 300 umfasst ein aus Aluminiumprofilen zusammengebautes Maschinengestell 310 mit zwei seitlichen Linearführungen 311, 312. Auf diesen Linearführungen 311, 312 ist eine Brücke 320 in Längsrichtung verschiebbar geführt. Die Brücke 320 umfasst eine weitere Linearführung 321, an welcher ein Wagen 330 quer zum Maschinengestell 310 verschiebbar angeordnet ist. Am Wagen 330 ist ein Trennkopf 100 wie vorstehend im Zusammenhang mit den Figuren 1A-D beschrieben vertikal verschiebbar angeordnet. An der Rückseite der Brücke 320 ist zudem ein Fräskopf 400 ebenfalls vertikal verschiebbar angeordnet. Die Versorgung und Steuerung der auf der Brücke 320 vorhandenen Antriebe erfolgt über eine Energiekette 313, die seitlich neben einer der Linearführungen 311 am Maschinengestell 310 angeordnet ist. Die Brücke 320 mit dem Trennkopf 100 ist weiter unten, im Zusammenhang mit der Figur 5 näher beschrieben.

Zwischen den beiden am Maschinengestell 310 angeordneten Linearführungen 311, 312 umfasst die Bearbeitungsstation 300 einen Tisch 340 mit einer Trägerplatte 341 aus Aluminium, auf welche das zu bearbeitende Laminat 200 aufgelegt werden kann. Die Trägerplatte 341 umfasst eine an sich bekannte Vakuumeinrichtung zum Halten des Werkstücks. Der Tisch 340 ist auf zwischen den Längsstreben des Maschinengestells 310 verlaufenden Querstreben befestigt. Unterhalb des Tischs 340 ist eine Wanne 350 vorhanden, welche beim Bearbeitungsprozess entstehende Späne aufnimmt. Innerhalb der Wanne verläuft ein Transportband 351, welches die Späne nach hinten aus der Wanne 350 transportieren kann. In der Verlängerung der Wanne 350 ist ein Sammelbehälter 352 positioniert.

Die Figur 5 zeigt einen vergrösserten Ausschnitt aus dem Schrägbild der Bearbeitungsstation. Zur Längsbewegung der Brücke 320 auf dem Maschinengestell 310 sind an der Brücke zwei Servoantriebe 322, 323 angeordnet, die über ein Ritzel je auf eine entlang dem Maschinengestell 310 verlaufende Zahnstange wirken. Die beiden Servoantriebe 322, 323 sind über die Maschinensteuerung elektronisch miteinander synchronisiert. Zwei weitere Servoantriebe 324, 325, welche ebenfalls über Ritzel auf dieselben Zahnstangen wirken, sind hinter der Brücke 320 an derselben angeordnet (siehe Figur 4C). Durch Zusammenwirken der jeweils auf dieselbe Zahnstange wirkenden Servoantriebe 322, 324; 323, 325 kann die Brücke 320 für entsprechende Bearbeitungsvorgänge stabil und positionsgenau am Maschinengestell 310 fixiert werden.

Zwei weitere Servoantriebe 331, 332 sind am Wagen 330 angeordnet. Der erste Servoantrieb 331 wirkt über ein Ritzel auf eine an der Brücke 320 angeordnete, quer verlaufende Zahnstange. Der zweite Servoantrieb 332 dient zur Höhenverstellung des Trennkopfs 100 relativ zum Wagen 330 über eine entsprechende Kugelrollspindel. Der Fräskopf 400 auf der Rückseite der Brücke 320 ist analog am Wagen 320 angeordnet, er ist also unabhängig vom Trennkopf 100 ebenfalls relativ zum Wagen 320 höhenverstellbar. Die Versorgung und Steuerung der am Wagen 320 sowie am Trennkopf 100 bzw. Fräskopf 400 angeordneten Antriebe erfolgt über drei weitere Energieketten 324, 325, 326.

Der Trennkopf ist also in Bezug auf das Maschinengestell 310 in einem kartesischen Linearsystem in X-, Y- und Z-Richtung programmgesteuert bewegbar. Der Schneidkopf stellt drei weitere Servoachsen (Drehung um Z-Achse, Relativverstellung, Messerantrieb) zur Verfügung.

Die erfindungsgemässe Bearbeitungsstation kann insbesondere wie folgt betrieben werden. Zunächst wird das Laminat 200 auf die Trägerplatte 341 des Tischs 340 aufgelegt, z. B. mittels eines Industrieroboters mit Sauggreifern. Das Laminat wird durch die Vakuumeinrichtung auf der Trägerplatte 341 gehalten.

Anschliessend wird die Position und Ausrichtung der Glasplatte bestimmt. Dies kann insbesondere mit einem Verfahren erfolgen, wie es aus der am 16. Mai 2008 eingereichten EP 08 405 137.4 der Anmelder der vorliegenden Anmeldung hervorgeht. Im Rahmen dieses Verfahrens werden folgende Schritte ausgeführt:
a) vor dem Laminationsschritt wird mindestens eine Ortsmarkierung an der Glasplatte angebracht und mindestens ein Abstands- und/oder Winkelwert der festen Platte in Bezug auf die Ortsmarkierung wird bestimmt;
b) nach dem Laminationsschritt wird das Laminat bearbeitet, wobei das Laminat und das Bearbeitungswerkzeug in Abhängigkeit der Ortsmarkierung und des mindestens einen Abstands- und/oder Winkelwerts automatisch relativ zueinander positioniert werden.

Der Abstands- und/oder Winkelwert wird insbesondere in einer zentralen Datenbank gespeichert. Die gespeicherten Werte umfassen zudem mit Vorteil sämtliche Informationen, die zu einer für den auszuführenden Prozess ausreichend genauen Definition der Kontur der Glasplatte benötigt werden. Die angebrachten Markierungen werden im Vorfeld des Trennvorgangs dann insbesondere optisch erfasst, und die erfassten Daten über die Geometrie der Glasplatte des Laminats werden aus der Datenbank abgerufen. Die optische Erfassung kann mittels einer oder mehrerer Kameras erfolgen, die an der Brücke 320 oder sonstwie an der Bearbeitungsstation 300 angebracht sind. Die genaue Positionierung und Ausrichtung des Laminats 200 auf der Trägerplatte 341 ist somit nicht kritisch. Wichtig ist lediglich, dass es auf allen vier Seiten über die Trägerplatte 341 hinausragt, damit der Rand bearbeitet werden kann.

Der Trägerkopf wird nun mit Hilfe der entsprechenden Servoantriebe an das Laminat 200 herangeführt, und zwar in der Verlängerung der zuerst zu bearbeitenden Kante. Die Positionierung, der Abstand vom Laminat 200 sowie die Ausrichtung der Messer wird mit Hilfe der erfassten Markierungen und den abgerufenen Daten über die Glasplatte 341 vorgenommen. Ein Abstand der Schnittkante von der Kante der Glasplatte 341 von 0.2 - 0.5 mm hat sich als geeignet erwiesen. Anschliessend wird die erste Kante bearbeitet, wobei der Trennkopf 100 mit Hilfe der längs und quer verlaufenden Linearführungen in einer geraden Linie in Bearbeitungsrichtung geführt wird. Es ist zu beachten, dass die Bearbeitungsrichtung in der Regel weder genau in Längsrichtung noch genau in Querrichtung bewegt wird, weil zum einen das Laminat 200 nicht exakt auf der Trägerplatte 341 ausgerichtet ist und weil zum anderen die Glasplatte des Laminats in der Regel nicht exakt rechteckig ist. Durch das Zusammenwirken der beiden Linearachsen und die beliebige Verdrehbarkeit des unteren Teils des Trennkopfs ist es jedoch möglich, schräg verlaufende Kanten zu bearbeiten. Da auch Wechsel der Bearbeitungsrichtung jederzeit möglich sind, können Laminate unterschiedlichster Form (z. B. dreieckige, sechseckige oder runde Laminate) bearbeitet werden. Eine Grenze ist eigentlich nur bei Laminaten mit konkaven Aussenkanten gegeben, wenn diese einen gewissen (von der Ausbildung des Trennkopfs abhängigen) Krümmungsradius unterschreiten.

Während des Schneidvorgangs dient das Gegenmesser 140 primär als Niederhalter für die Rückseitenfolie 230, während das Schneidmesser 130 in Zusammenwirkung mit dem Gegenmesser 140 den eigentlichen Trennvorgang scherenartig bewirkt. Die gegenläufige Drehbewegung der beiden Messer ist - wie oben erwähnt - mechanisch synchronisiert. Zusätzlich ist sie auf die lineare Bewegung des Trennkopfs 100 derart abgestimmt, dass die Messer (wiederum scherenartig) auf dem zu bearbeitenden Werkstück abrollen, dass also keine tangentiale Relativbewegung zwischen den Messern und der Rückseitenfolie 230 bzw. der Laminat-Zwischenschicht 220 auftritt.

Nach Bearbeitung der ersten Kante wird der Trennkopf 100 um ca. 90° gedreht und neu positioniert, so dass die zweite Kante bearbeitet werden kann. Dieser Vorgang wird wiederholt, bis die Rückseitenfolie und die Laminat-Zwischenschicht an allen Aussenkanten abgetrennt sind.

Diese Verfahrensschritte können innert kurzer Zeit durchgeführt werden, eine Arbeitsgeschwindigkeit von mehr als 2 m/s ist erzielbar. Durch den an der Rückseite der Brücke 320 angeordneten Fräskopf 400 kann deshalb anschliessend in derselben Bearbeitungsstation ein Fräsvorgang stattfinden, insbesondere um bei der Herstellung von Solarpanels im Laminat vorhandene Kontaktstellen freizulegen, mit einem Verfahren wie es aus der am 30. April 2008 eingereichten EP 08 405 123.4 der Anmelder der vorliegenden Anmeldung hervorgeht. Im Rahmen dieses Verfahrens werden folgende Schritte ausgeführt:
a) Vor dem Laminationsschritt werden Solarzellen durch elektrisch leitende Verbinder verbunden,
b) wobei die elektrisch leitenden Verbinder derart in das zu laminierende Solarpanel eingebracht werden, dass sie nach dem Laminationsschritt vollständig im Solarpanel einlaminiert sind.
c) Nach dem Laminationsschritt wird ein Kontaktbereich der elektrisch leitenden Verbinder freigelegt, indem mindestens eine der die Solarzellen überdeckenden Schichten (insbesondere die Rückseitenfolie) in einem entsprechenden Bereich vollständig durchstossen, insbesondere abgetragen, wird.
d) Der Kontaktbereich der elektrisch leitenden Verbinder wird mittels eines von aussen abgreifbaren Anschlusselements kontaktiert.

Insbesondere der Schritt c) dieses Verfahrens kann auf der erfindungsgemässen Bearbeitungsstation durchgeführt werden.

Bei der Bearbeitung entstehende Abfälle fallen in die Wanne 350 und werden vom Transportband 351 in den Behälter 352 gefördert. Schliesslich wird das bearbeitete Laminat wieder von der Trägerplatte 341 entnommen, insbesondere wieder durch einen entsprechend programmierten Industrieroboter.

In einer Ecke der Bearbeitungsstation 300 kann eine Schärfstation vorgesehen werden (hier nicht dargestellt). Wird festgestellt, dass die Schneidkante stumpf ist oder Riefen aufweist, z. B. mit Hilfe eines Lasermessgeräts zur Ausbruchüberwachung der Schneidkante, wird der Trennkopf 100 mit Hilfe der entsprechenden Linearachsen an die Schärfstation herangefahren. Die Brücke 320 wird anschliessend durch Zusammenwirken der einander gegenüberliegenden Servoantriebe 322, 324 bzw. 323, 325 genau und spielfrei positioniert. (In einer alternativen Ausführungsform wird die Brücke mittels jeweils nur einen Antriebs an einen festen Anschlag herangefahren.) Das Schärfen erfolgt durch bekannte Mittel, z. B. mit Hilfe von rotierend angetriebenen Schleifscheiben, wobei während des Schärfvorgangs auch die beiden Messer mit Hilfe des Servoantriebs 111 gedreht werden können. Nach dem Schärfvorgang wird der Abstand der beiden Messer mit Hilfe des Servoantriebs 112 automatisch neu justiert, so dass der gewünschte Schneidwinkel beibehalten wird. Das Nachschärfen der beiden Messer kann somit ohne Demontage derselben erfolgen.

Die Erfindung ist nicht auf das dargestellte Ausführungsbeispiel beschränkt. So kann insbesondere die konstruktive Ausführung des erfindungsgemässen Prinzips auf andere Weise erfolgen. So können insbesondere die Freiheitsgrade der beiden Messer in Bezug auf das zu bearbeitende Laminat anders realisiert sein; ist beispielsweise ein Drehtisch vorhanden und der Abstand der seitlichen Linearführungen ausreichend gross, kann auf die um die Vertikalachse drehbare Anordnung der Messer am Trennkopf verzichtet werden. Analog dazu kann anstelle des Trennkopfs grundsätzlich auch der Werkstückträger vertikal beweglich ausgebildet sein. Im Weiteren ist es auch denkbar, die für die Bearbeitung notwendigen Linearbewegungen durch Bewegungen des Werkstücks und nicht des Werkzeugs zu bewirken. Die Anordnung des Fräskopfs an der Brücke ist optional. Falls ein solcher Fräsvorgang überhaupt ausgeführt werden muss, kann er auch in einer gesonderten Bearbeitungsstation erfolgen.

Zusammenfassend ist festzustellen, dass durch die Erfindung ein Verfahren zum Abtrennen eines überstehenden Abschnitts einer Schicht eines Laminats geschaffen wird, welches einen präzisen Schnitt und eine hohe Arbeitsgeschwindigkeit ermöglicht.

## Patentansprüche

1. Verfahren zum Abtrennen eines überstehenden Abschnitts einer Schicht eines Laminats (200), insbesondere einer Rückseitenfolie (230) eines Laminats (200), welches mindestens eine feste Platte (210), insbesondere eine Glasplatte, aufweist, wobei ein Trennwerkzeug (100) mit einem rotierenden Schneidmesser (130) und einem rotierenden Gegenmesser (140) eingesetzt wird, wobei die Messer (130, 140) gegenläufig um parallele Achsen in Drehung versetzt werden und wobei das Schneidmesser (130) und das Gegenmesser (140) derart seitlich versetzt sind, dass in einem Arbeitsbereich eine Hauptfläche des Schneidmessers (130) eine Hauptfläche des Gegenmessers (140) kontaktiert.

2. Verfahren nach Anspruch 1, **dadurch gekennzeichnet, dass** das Schneidmesser (130) und das Gegenmesser (140) derart aufeinander zugestellt werden, dass sie in axialer Richtung gegeneinander vorgespannt sind.

3. Verfahren nach Anspruch 1 oder 2, **dadurch gekennzeichnet, dass** Drehbewegungen des Schneidmessers (130) und des Gegenmessers (140) und eine Relativbewegung zwischen dem Trennwerkzeug (100) und dem Laminat (200) derart gesteuert sind, dass ein Umfangsbereich der Messer (130, 140) während des Abtrennens relativ zum überstehenden Abschnitt im Wesentlichen stillsteht.

4. Verfahren nach einem der Ansprüche 1 bis 3, zum Bearbeiten eines Laminats (200), welches mindestens eine feste Platte (210) aufweist, **dadurch gekennzeichnet, dass** es folgende Schritte umfasst:
c) vor einem Laminationsschritt Anbringen mindestens einer Ortsmarkierung an der festen Platte (210) und Bestimmung mindestens eines Abstands- und/oder Winkelwerts der festen Platte (210) in Bezug auf die Ortsmarkierung;
d) nach dem Laminationsschritt Abtrennen des überstehenden Abschnitts, wobei das Laminat (200) und das Trennwerkzeug (100) in Abhängigkeit der Ortsmarkierung und des mindestens einen Abstands- und/oder Winkelwerts automatisch relativ zueinander positioniert werden.

5. Trennwerkzeug zum Abtrennen eines überstehenden Abschnitts einer Schicht eines Laminats (200), insbesondere einer Rückseitenfolie (230) eines Laminats, welches mindestens eine feste Platte (210), insbesondere eine Glasplatte, aufweist, umfassend
a) ein rotierendes Schneidmesser (130),
b) ein rotierendes Gegenmesser (140),
c) mindestens eine Antriebseinrichtung (111) zum drehbaren Antreiben des Schneidmessers (130) und des Gegenmessers (140),
wobei
d) das Schneidmesser (130) und das Gegenmesser (140) um parallele Drehachsen gelagert sind,
e) das Schneidmesser (130) und das Gegenmesser (140) gegenläufig antreibbar sind, und wobei
f) das Schneidmesser (130) und das Gegenmesser (140) derart seitlich versetzt angeordnet sind, dass in einem Arbeitsbereich eine Hauptfläche des Schneidmessers (130) eine Hauptfläche des Gegenmessers (140) kontaktiert.

6. Trennwerkzeug nach Anspruch 5, **dadurch gekennzeichnet, dass** die Drehachsen des Schneidmessers (130) und des Gegenmessers (140) derart angeordnet sind, dass eine durch die beiden Drehachsen verlaufende Ebene schräg zu einer Arbeitsrichtung verläuft, wobei ein Winkel zwischen der Ebene und der Arbeitsrichtung bevorzugt 55 - 85°, besonders bevorzugt 65 - 80° beträgt.

7. Trennwerkzeug nach Anspruch 5 oder 6, **dadurch gekennzeichnet, dass** die Drehachse des Schneidmessers (130) und/oder die Drehachse des Gegenmessers (140) verstellbar, insbesondere automatisch verstellbar, derart ausgebildet ist, dass ein Abstand der Drehachse des Schneidmessers (130) und der Drehachse des Gegenmessers (140) verstellbar ist.

8. Bearbeitungsstation zum Abtrennen eines überstehenden Abschnitts einer Schicht eines Laminats (200), insbesondere einer Rückseitenfolie (230) eines Laminats, welches mindestens eine feste Platte (210), insbesondere eine Glasplatte, aufweist, umfassend mindestens ein Trennwerkzeug (100) nach einem der Ansprüche 5 bis 7.

9. Bearbeitungsstation nach Anspruch 8, umfassend
a) eine Halteeinrichtung (340), insbesondere einen Tisch, zum Halten des Laminats (200),
b) eine Lineareinheit (320), welche entlang dem in der Halteeinrichtung (340) gehaltenen Laminats (200) bewegbar ist,
c) einen Trennkopf (100), an welchem das Schneidmesser (130) und das Gegenmesser (140) angeordnet sind, wobei der Trennkopf (100) an der Lineareinheit (320) gelagert ist.

10. Bearbeitungsstation nach Anspruch 9, **dadurch gekennzeichnet, dass** der Trennkopf (100) an der Lineareinheit (320) derart beweglich gelagert ist, dass er in einer zur Bewegungsrichtung der Lineareinheit (320) senkrechten Richtung horizontal bewegbar ist.

11. Bearbeitungsstation nach Anspruch 9 oder 10, **dadurch gekennzeichnet, dass** der Trennkopf (100) derart ausgebildet ist, dass das Schneidmesser (130) und das Gegenmesser (140) bezüglich der Lineareinheit (320) um eine zu einer Hauptfläche des zu bearbeitenden Laminats (200) senkrechte Achse drehbar gelagert sind.

12. Bearbeitungsstation nach Anspruch 11, **dadurch gekennzeichnet, dass** der Trennkopf (100) mindestens zwei Servo-Antriebe (111, 113) aufweist, welche über koaxiale Wellen (160, 181) einen Antrieb des Schneidmessers (130) und des Gegenmessers (140) und eine Verstellung der Drehlage des Schneidmessers (130) und des Gegenmessers (140) bewirken.

13. Bearbeitungsstation nach Anspruch 12, **gekennzeichnet durch** einen dritten Servo-Antrieb (112), welcher über eine weitere koaxiale Welle (150) eine Relativverstellung der Drehachse des Schneidmessers (130) und der Drehachse des Gegenmessers (140) ermöglicht.

14. Bearbeitungsstation nach einem der Ansprüche 8 bis 13, **gekennzeichnet durch** eine Schärfstation, welche derart angeordnet ist, dass sie zum Schärfen des Schneidmessers (130) und des Gegenmessers (140) vom Trennkopf (100) automatisch angefahren werden kann.

15. Anlage zum Bearbeiten eines Laminats (200), welches mindestens eine feste Platte (210), insbesondere eine Glasplatte, aufweist, umfassend:
e) eine Markierstation zum Anbringen einer Ortsmarkierung an der festen Platte (210);
f) eine Messstation zum Bestimmen mindestens eines Abstands- und/oder Winkelwerts der festen Platte (210) in Bezug auf die Ortsmarkierung;
g) eine Laminierstation zum Laminieren des Laminats (200), welche der Markierstation und der Messstation nachgeordnet ist; und
h) eine Bearbeitungsstation nach einem der Ansprüche 8 bis 14, wobei das Trennwerkzeug (100) und das Laminat (200) in Abhängigkeit der Ortsmarkierung und des mindestens einen Abstands- und/oder Winkelwerts automatisch relativ zueinander positionierbar sind.
